# EUROPÄISCHE PATENTSCHRIFT

(11) **EP 0 741 963 B1**
(45) Veröffentlichungstag und Bekanntmachung des Hinweises auf die Patenterteilung: **22.09.1999**
(21) Anmeldenummer: 96111478.2
(22) Anmeldetag: 17.06.1994
(51) Int. Cl.: A01F 7/06

(54) **Axialtrennvorrichtung**
Axial flow thresher-separator device
Dispositif batteur-séparateur à écoulement axial

(30) Priorität: 01.07.1993 US 86774
(43) Veröffentlichungstag der Anmeldung: 13.11.1996
(62) Teilanmeldung aus: 94109374.2
(73) Patentinhaber: Deere & Company, Moline, Illinois 61265-8098 (US)
(72) Erfinder: Stickler, Mark Fredrick, Silvis, Illinois 61282 (US); Braunhardt, Klaus Adam, 66482 Zweibrücken (DE); Gerber, Merle Ray, Moline, Illinois 61265 (US)
(74) Vertreter: Feldmann, Bernhard

(56) Entgegenhaltungen:
- EP-A- 0 085 358
- DE-C- 427 379
- DE-C- 571 547
- GB-A- 2 053 644
- US-A- 4 124 032
- US-A- 5 112 279

## Beschreibung

Die Erfindung betrifft eine Axialtrennvorrichtung zur Bearbeitung von Erntegut mit einem Rotorgehäuse und einem in diesem drehbar gelagerten Rotor, die sich jeweils durch einen Dreschabschnitt und einen Abscheideabschnitt erstrecken.

Die US-A-5,112,279 offenbart eine Axialtrennvorrichtung in einem Mähdrescher mit zwei parallel zueinander verlaufenden Rotoren in jeweils einem Rotorgehäuse, das an der Aufnahmeseite beginnend einen Zufuhrabschnitt, einen Dreschabschnitt und einen Abscheideabschnitt aufweist. In den jeweiligen Abschnitten wird jedes Rotorgehäuse von jeweils einem Deckel verschlossen, wobei die Deckel unterschiedlich ausgebildet und gegen andere Deckel für andere Erntegüter austauschbar sind. Die Drehachse der Rotoren und die Mittenachse der Rotorgehäuse Einschreiben verlaufen parallel zueinander und weisen einen Abstand zueinander auf; demnach ist jeder Rotor in dem ihn aufnehmenden Rotorgehäuse exzentrisch gelagert.

Aus der US-A-4,348,855 geht ein Mähdrescher in Axialflußbauart hervor, bei dem ein Dresch- und Abscheiderotor konzentrisch in einem Rotorgehäuse aufgenommen ist.

Die der Erfindung zugrunde liegende Aufgabe wird darin gesehen, eine Axialtrennvorrichtung vorzuschlagen, die unter einer Vielzahl von Erntebedingungen einsetzbar ist.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann durch die Auswahl der das Rotorgehäuse verschließenden und somit den Abstand zwischen dem Rotor und der Rotorgehäusewand bestimmenden Deckel bzw. durch deren Anordnung eine konzentrische oder exzentrische Lage des Rotors in bezug auf das Rotorgehäuse hervorgerufen werden. Damit kann für jedes Dreschgut oder jeden Dreschgutzustand die jeweils geeignete Bauweise angewandt werden. Besonders vorteilhaft ist dabei, daß der Rotor und somit auch seine Lagerung, sein Antrieb und seine Aufnahme- und Abgabeumgebung unter allen Bauarten beibehalten werden können, da diese von der Änderung der Abmessungen und Form des Rotorgehäuses infolge des Deckelabstands nicht beeinflußt werden.

Unter den vielen Möglichkeiten, eine Exzentrizität herzustellen, ist diejenige besonders wirksam, bei der eine die Mitte des Rotorgehäuses in dem Abscheideabschnitt definierende Abscheideachse parallel und oberhalb der zentrischen Rotorachse des Rotors verläuft, weil dies einen raschen Austritt von Getreide aus dem Dreschgut aufgrund der Fliehkraft erlaubt.

Aber auch die gegebenenfalls zusätzliche exzentrische Anordnung in dem Dreschabschnitt kann große Vorteile mit sich bringen, weil bereits ausgedroschene Körner aus der sich weiter in Drehung befindlichen Strohmatte nach außen treten und beim nächsten Passieren des durchlässigen Bereichs des Rotorgehäuses ausfallen können, anstatt einem weiteren Dreschvorgang zu unterliegen.

Eine vielen Erntebedingungen gerecht werdende Bauweise ist gefunden, wenn in dem Dreschbereich eine konzentrische und in dem Abscheidebereich eine exzentrische räumliche Beziehung zwischen dem Rotor und dem Rotorgehäuse gegeben ist, weil in dem Dreschabschnitt eine sehr reibintensive Einwirkung auf das Dreschgut und in dem Abscheideabschnitt ein Auflockern des Ernteguts erfolgt.

Wenn nicht nur die Deckel, sondern auch diese tragende Schienen, Abstandsstücke und dergleichen gegen andere mit anderen Abmessungen austauschbar bzw. montier- und demontierbar sind, erhöht sich der Grad der erreichbaren Exzentrizität.

In der Zeichnung ist ein nachfolgend näher beschriebenes Ausführungsbeispiel der Erfindung dargestellt. Es zeigt:
- Fig. 1: einen Mähdrescher mit einer erfindungsgemäßen Axialtrennvorrichtung in Seitenansicht und schematischer Darstellung,
- Fig. 2: die Axialtrennvorrichtung nach Figur 1 in vergrößerter Darstellung,
- Fig. 3: die Axialtrennvorrichtung in einem Vertikalschnitt entlang der Linie 3-3 in Figur 2 und in Blickrichtung der dazugehörigen Pfeile und
- Fig. 4: die Axialtrennvorrichtung in einem Vertikalschnitt entlang der Linie 4-4 in Figur 2 und in Blickrichtung der dazugehörigen Pfeile.

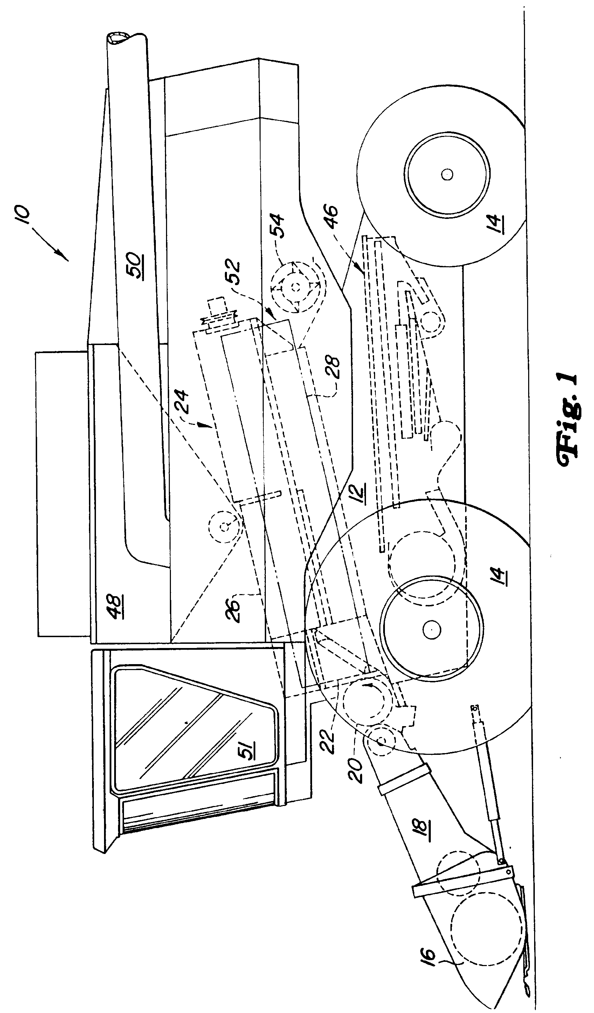

Figur 1 zeigt einen Mähdrescher 10 mit einem Chassis 12 und sich von diesem erstreckenden Bodenlaufrädern 14. Eine Erntebergungsvorrichtung 16 ist am vorderen Ende des Mähdreschers 10 angebracht und wird dazu benutzt, Erntegut aufzunehmen und es einem Schrägförderer 18 aufzugeben, von wo aus es einer Leittrommel 20 zugeleitet wird. Die Leittrommel 20 gibt das Erntegut durch einen Einlaßübergangsbereich 22 nach oben an eine erfindungsgemäße Axialtrennvorrichtung 24 weiter, die sich zwischen nicht näher bezeichneten Seitenwänden des Mähdreschers 10 befindet. Die Seitenwände bilden zugleich einen Teil des Chassis 12.

Die Axialtrennvorrichtung 24 setzt sich aus einem Rotorgehäuse 26 und einem in diesem gelagerten Rotor 28 zusammen, die sich beide in der Längsrichtung des Mähdreschers 10 erstrecken. Das Erntegut gelangt über den Einlaßübergangsbereich 22 in das Rotorgehäuse 26. Der Rotor 28 erstreckt sich durch einen Beschickungsabschnitt 30, einen Dreschabschnitt 32 und einen Abscheideabschnitt 34. Der Beschickungsabschnitt 30 ist mit schraubenlinien- oder spiralförmigen Kufen 33 bestückt, die den Anfang einer Drehbewegung des Ernteguts im Rotorgehäuse 26 herum einleiten.

In beiden Erntegutbearbeitungsabschnitten, nämlich dem Dreschabschnitt 32 und dem Abscheideabschnitt 34 ist der Rotor 28 mit Gutmitnehmern 38 bzw. 42 ausgerüstet. Die Gutmitnehmer 38 des Dreschabschnitts 32 enthalten Platten der in den Figuren 8 und 9 der US-A-4,362,168 dargestellten Art. Getreide und Spreu, die sich von der Erntegutmatte lösen, fallen durch einen Dreschkorb 40, der sich im Bodenbereich des Rotorgehäuses 26 befindet. Der Dreschkorb 40 bildet ein Gitter, das einen Durchtritt von Erntegutteilen zu einem Reinigungssystem 46, die größer sind als das Getreide oder die Spreu, verhindert.

Die Gutmitnehmer 42 des Abscheideabschnitts 34 enthalten sich radial nach außen erstreckende Abscheidezinken 42, die denen aus den Figuren 11 und 12 der US-A-5,112,279 entsprechen. Der Bodenbereich des Rotorgehäuses 26 in dem Abscheideabschnitt 34 ist mit einem Rost 44 versehen, durch den Getreide und Spreu hindurchfallen, die während des Trennvorgangs herausgelöst worden sind.

Wie dies aus Figur 1 zu entnehmen ist, gelangen Getreide und Spreu, die durch den Dreschkorb 40 und den Rost 44 hindurch fallen, zu dem Reinigungssystem 46, das die Spreu aus dem Getreide entfernt.

Das gereinigte Getreide wird anschließend mittels eines nicht gezeigten Körnerelevators einem Korntank 48 zugeführt, von wo aus es mittels eines Entleerförderers 50 einem Lastwagen oder einem Getreideanhänger aufgegeben werden kann. Wenn das ausgedroschene Erntegut - normalerweise Stroh - das Ende der Axialtrennvorrichtung 24 erreicht, wird es durch einen Auslaß 52 einer Abgabetrommel 54 aufgegeben, die es am rückwärtigen Ende des Mähdreschers 10 auswirft. Die Bedienung des Mähdreschers 10 erfolgt von einer Fahrerkabine 51 aus.

Der Rotor 28 ist in der Längsrichtung des Mähdreschers 10 ausgerichtet und definiert mit seiner Drehachse eine Rotorachse RA. Diese Rotorachse RA ist eine gerade Linie, die sich durch den Beschickungsabschnitt 30, den Dreschabschnitt 32 und den Abscheideabschnitt 34 mit dem Rotor 28 erstreckt.

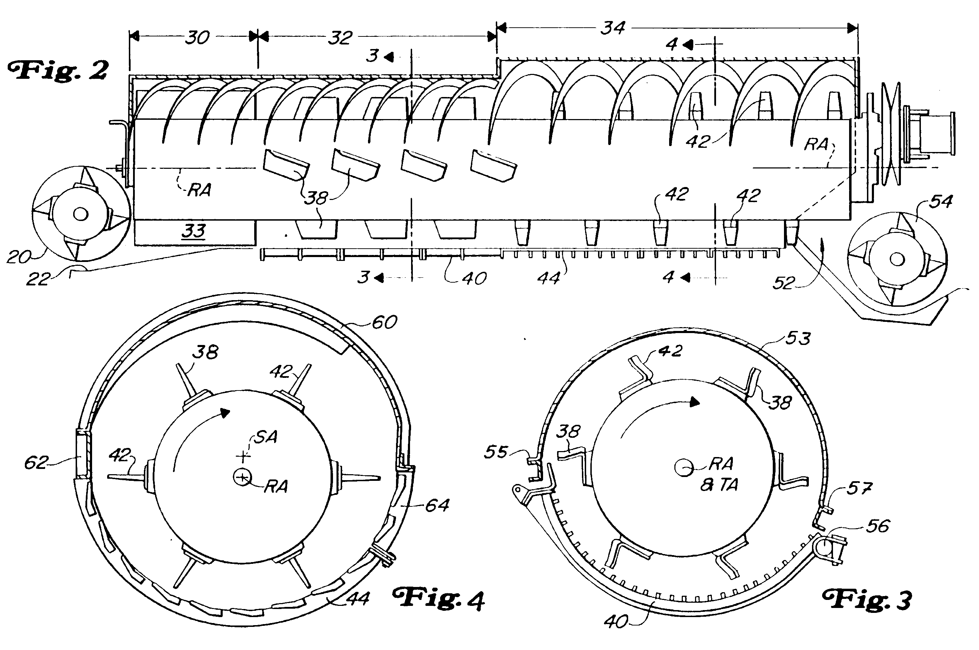

Wie aus Figur 3 hervorgeht, ist in dem Dreschabschnitt 32 ein Deckel 53 vorgesehen, der an sich längs erstreckende Schienen 55 und 57 angeschraubt oder sonstwie lösbar befestigt ist. Es wird darauf hingewiesen, daß der Deckel 53 mit in Figur 2 gezeigten, nicht näher bezeichneten schraubenlinienförmigen Kufen besetzt ist, obwohl diese in Figur 3 der Übersichtlichkeit wegen weggelassen worden sind. Der Dreschkorb 40 ist an ein Gelenk 56 schwenkbar angeschlossen, das sich unterhalb der Schiene 57 befindet. Mittels der Schwenkmöglichkeit des Dreschkorbs 40 um das Gelenk 56 kann der Abstand des Rotors 28 zu dem Dreschkorb 40 in dem Dreschabschnitt 32 eingestellt werden. Die Größe des Abstands, d. h. des Dreschspalts, ist abhängig von dem jeweiligen Erntegut und den Gutbedingungen.

Das Rotorgehäuse 26 erstreckt sich ebenfalls in der Längsrichtung des Mähdreschers 10, um den Rotor 28 in sich aufzunehmen. Das Rotorgehäuse 26 definiert in dem Dreschabschnitt 32 eine Dreschachse TA. Da der Dreschkorb 40 verstellbar ist, bildet das Rotorgehäuse 26 in dem Dreschabschnitt 32 keinen exakt runden Zylinder. Die Lage der Dreschachse TA wird durch den Deckel 53 festgelegt und ist die Mittellinie des von dem Deckel 53 bestimmten Zylinders. Demzufolge ist gemäß Figur 3 der Dreschabschnitt 32 des Rotorgehäuses 26 konzentrisch oder im wesentlichen konzentrisch zu dem Dreschabschnitt 32 des Rotors 28 ausgerichtet, da die Dreschachse TA und die Rotorachse RA kolinear bzw. koaxial verlaufen.

Gemäß Figur 4 ist in dem Abscheideabschnitt 34 ein Deckel 60 mit schraubenlinienförmigen Kufen vorgesehen. Dieser Deckel 60 ist auf eine Schiene 62 und eine Rostverlängerung 64 aufgeschraubt. Der Abscheideabschnitt 34 hat somit einen im wesentlichen ovalen Querschnitt, wobei die Rotorachse RA parallel und unterhalb einer Abscheideachse SA verläuft. Die Abscheideachse SA ist definiert als die Flächenmittelpunkte der quer zur Längsachse des Rotorgehäuses 26 verlaufenden Querschnitte über die Länge des Abscheideabschnitts 34. Demzufolge ist gemäß Figur 4 der Abscheideabschnitt 34 des Rotorgehäuses 26 mit Bezug auf den Abscheideabschnitt 34 des Rotors 28 exzentrisch angeordnet.

Nach den bisherigen Ausführungen ist es möglich, das beschriebene Rotorgehäuse 26 von einer konzentrischen in eine exzentrische Anordnung und umgekehrt zu ändern. Insbesondere durch das lösbare Anbringen unterschiedlicher Deckel 53, 60, nicht gezeigten Abstandsstücken und Schienen 55, 57 und 62 an dem Rotorgehäuse 26 kann die Ausbildung der Axialtrennvorrichtung 24 ohne eine Änderung der Lage des Rotors 28 oder dessen Rotorachse RA vorgenommen werden. Beispielsweise kann der Dreschabschnitt 32 von einer gegenüber der Rotorachse RA konzentrischen in eine exzentrische Anordnung umgeändert werden, indem ein anderer Deckel 53 und Abstandsstücke auf die Schienen 55 und 57 aufgeschraubt werden. In gleicher Weise kann der Abscheideabschnitt 34 in eine konzentrische Bauweise geändert werden, indem der Deckel 60 und die Schiene 62 ausgetauscht bzw. entfernt werden.

## Patentansprüche

1. Axialtrennvorrichtung (24) zur Bearbeitung von Erntegut mit einem Rotorgehäuse (26) und einem in diesem drehbar gelagerten Rotor (28), die sich jeweils durch einen Dreschabschnitt (32) und einen Abscheideabschnitt (34) erstrecken, wobei ein vorzugsweise unterer durchlässiger Bereich des Rotorgehäuses (26) getrennt von einem vorzugsweise oberen mit wenigstens einem Deckel (53, 60) verschließbaren Bereich des Rotorgehäuses (26) ausgebildet ist und der Deckel (53, 60) austauschbar ist, gekennzeichnet durch Deckel (53, 60) oder Schienen (55, 57, 62) oder Abstandsstücke zwischen dem Deckel (53, 60) und dem unteren Bereich des Rotorgehäuses (26) von jeweils unterschiedlicher Höhe zum Erreichen einer exzentrischen oder einer wenigstens annähernd konzentrischen Lage des Rotorgehäuses (26) in dem Dresch- und/oder Abscheideabschnitt (32, 34) gegenüber dem Rotor (28).

2. Axialtrennvorrichtung nach Anspruch 1, gekennzeichnet durch Deckel (53, 60) oder deren Anordnung derart, daß eine die Mitte des Rotorgehäuses (26) in dem Abscheideabschnitt (34) definierende Trennachse SA parallel zu und oberhalb der zentrischen Rotorachse RA des Rotors (28) verläuft.

3. Axialtrennvorrichtung nach Anspruch 1 oder 2, gekennzeichnet durch Deckel (53, 60) oder deren Anordnung derart, daß eine die Mitte des Rotorgehäuses (26) in dem Dreschabschnitt (32) definierende Dreschachse TA parallel zu und oberhalb der zentrischen Rotorachse RA des Rotors (28) verläuft.

4. Axialtrennvorrichtung nach Anspruch 1 oder 2, gekennzeichnet durch Deckel (53, 60) oder deren Anordnung derart, daß der Rotor (28) in dem Dreschabschnitt (32) eine wenigstens annähernd konzentrische und in dem Abscheideabschnitt (34) eine exzentrische Lage einnimmt.

5. Axialtrennvorrichtung nach einem oder mehreren der vorherigen Ansprüche, dadurch gekennzeichnet, daß die Deckel (53, 60) auf insbesondere austauschbare Schienen (55, 57, 62) aufgeschraubt sind.

6. Axialtrennvorrichtung nach einem oder mehreren der vorherigen Ansprüche, dadurch gekennzeichnet, daß die Deckel (53, 60) auf unterschiedlichen Abstandsstücken mit jeweils anderen Abmessungen aufgeschraubt sind.

## Claims

1. An axial separating device (24) for processing harvested material, with a rotor housing (26) and a rotor (28) rotatably journalled therein and each extending through a threshing section (32) and a separating section (34), wherein a preferably lower region of the rotor housing (26) which allows material through is formed separately from a preferably upper region of the rotor housing (26) which can be closed by at least one cover (53, 60) and the cover (53, 60) is interchangeable, characterized by covers (53, 60) or rails (55, 57, 62) or spacers between the cover (53, 60) and the lower region of the rotor housing (26) of respective different heights, for achieving an eccentric or an at least approximately concentric position of the rotor housing (26) in the threshing and/or separating section (32, 34) relative to the rotor (28).

2. An axial separating device according to claim 1, characterized by covers (53, 60) or their arrangement such that a separator axis SA defining the middle of the rotor housing (26) in the separating section (34) runs parallel to and above the central rotor axis RA of the rotor (28).

3. An axial separating device according to claim 1 or 2, characterized by covers (53, 60) or their arrangement such that a threshing axis TA defining the middle of the rotor housing (26) in the threshing section (32) runs parallel to and above the central rotor axis RA of the rotor (28).

4. An axial separating device according to claim 1 or 2, characterized by covers (53, 60) or their arrangement such that the rotor (28) assumes an at least approximately concentric position in the threshing section (32) and an eccentric position in the separating section (34).

5. An axial separating device according to one or more of the preceding claims, characterized in that the covers (53, 60) are screwed on to rails (55, 57, 62), especially interchangeable rails.

6. An axial separating device according to one or more of the preceding claims, characterized in that the covers (53, 60) are screwed on to different spacers with respective other dimensions.

## Revendications

1. Séparateur à flux axial (24) pour le traitement d'une matière récoltée, comportant un carter (26) pour un rotor et un rotor (28) monté de manière à pouvoir tourner dans ce carter, le carter et son rotor traversant respectivement une section de battage (32) et une section de séparation (34), et dans lequel une partie de traversée, de préférence intérieure, du carter (26) du rotor est formée séparément d'une partie de préférence supérieure du carter (26) du rotor, pouvant être fermée par au moins un couvercle (53,60) et le couvercle (53,60) est remplaçable, caractérisé par des couvercles (53,60), des rails (55, 57, 62) ou des entretoises entre le couvercle (53,60) et la partie inférieure du carter (26) du rotor et ayant des hauteurs respectivement différentes, pour l'obtention d'une position excentrique ou d'une position au moins approximativement concentrique du carter (26) du rotor dans la section de battage et/ou de séparation (32,34) par rapport au rotor (28).

2. Séparateur à flux axial selon la revendication 1, caractérisé par des couvercles (53,60) ou par leur disposition telle qu'un axe de séparation SA, qui définit le centre du carter (26) du rotor dans la section de séparation (34), s'étend parallèlement à et au-dessus de l'axe centré RA du rotor (28).

3. Séparateur à flux axial selon la revendication 1 ou 2, caractérisé par des couvercles (53,60) ou leur disposition de telle sorte qu'un axe de battage TA, qui définit le centre du carter (26) du rotor dans la section de battage, s'étend parallèlement a et au-dessus de l'axe centré RA du rotor (28).

4. Séparateur à flux axial selon la revendication 1 ou 2, caractérisé par des couvercles (53,60) ou leur disposition de telle sorte que le rotor (28) prend une position au moins approximativement concentrique dans la section de battage (32) et prend une position excentrique dans le section de séparation (34).

5. Séparateur à flux axial selon une ou plusieurs des revendications précédentes, caractérisé en ce que les couvercles (53, 60) sont vissés sur des rails (55, 57, 62) qui sont notamment interchangeables.

6. Séparateur à flux axial selon une ou plusieurs des revendications précédentes, caractérisé en ce que les couvercles (53, 60) sont vissés sur des entretoises différentes ayant respectivement d'autres dimensions.
